# EUROPÄISCHE PATENTSCHRIFT

(11) **EP 4 217 568 B1**
(45) Veröffentlichungstag und Bekanntmachung des Hinweises auf die Patenterteilung: **04.03.2026**
(21) Anmeldenummer: 21782542.1
(22) Anmeldetag: 24.09.2021
(51) Int. Cl.: E05F 1/10, E05F 3/22, E05F 15/63, H02K 7/116, H02K 21/24

(54) **ANTRIEBSEINRICHTUNG ZUM BEWEGEN EINES FLÜGELS**
DRIVE DEVICE FOR MOVING A LEAF
DISPOSITIF D'ENTRAÎNEMENT DESTINÉ À DÉPLACER UN BATTANT

(30) Priorität: 25.09.2020 DE 102020125096
(43) Veröffentlichungstag der Anmeldung: 02.08.2023
(73) Patentinhaber: dormakaba Deutschland GmbH, 58256 Ennepetal (DE)
(72) Erfinder: JÄEHNKE, Jan-Hendrik, 58256 Ennepetal (DE); BALK, Thomas, 58256 Ennepetal (DE); BUSCH, Sven, 58256 Ennepetal (DE)
(74) Vertreter: Balder IP Law, S.L.
(86) Internationale Anmeldenummer: PCT/EP2021/076300
(87) Internationale Veröffentlichungsnummer: WO 2022/063950

(56) Entgegenhaltungen:
- WO-A1-2013/169888
- WO-A1-2014/152907
- WO-A1-2019/233732
- DE-A1- 3 209 608
- DE-B3- 102015 112 685
- US-A1- 2010 089 190

## Beschreibung

Die Erfindung betrifft eine Antriebseinrichtung zum Bewegen eines Flügels mit den Merkmalen des Oberbegriffs des Anspruchs 1.

Antriebseinrichtungen können zum Bewegen eines Flügels Anwendung finden, wobei unter einem Flügel insbesondere ein Tür- oder Fensterflügel verstanden wird. Als Türflügel wird der schwenkbare Teil einer Tür bezeichnet, für den auch die Bezeichnung Türblatt geläufig ist. Derartige Antriebseinrichtungen zum Bewegen eines Flügels sind bekannt. Solche Antriebseinrichtungen umfassen eine Antriebseinheit sowie ein mit der Antriebseinheit gekoppeltes Zahnradgetriebe. Über das Zahnradgetriebe ist die Antriebseinheit mit einem Türschließer gekoppelt, so dass ein Flügel einer Tür durch den Türschließer geschlossen werden und bei Bedarf - beispielsweise im Brandfall zum Rauch- und Wärmeabzug - durch den Elektromotor geöffnet werden kann. Das Zahnradgetriebe ist an einer äußeren Oberfläche der Antriebseinheit offenliegend vorgesehen und nimmt daher einen zusätzlichen Bauraum ein. Die WO2014/152907 A1, DE 10 2015 112685 B3 und DE 32 09 608 A1 offenbaren Antriebseinrichtungen mit Motor-Getriebe-Modul und Schließer-Modul.

Eingangs genannte Antriebseinrichtungen werden typischerweise direkt an dem zu bewegenden Flügel oder an einer Türzarge bzw. einem Fensterrahmen vorgesehen. Insbesondere bei der Montage an der Türzarge oder dem Fensterrahmen ist der zur Verfügung stehende Bauraum sehr stark limitiert.

Vor diesem Hintergrund stellt sich die Aufgabe, eine kompakte Ausgestaltung der Antriebseinrichtung zu ermöglichen.

Die Aufgabe wird durch eine Antriebseinrichtung zum Bewegen eines Flügels, insbesondere eines Türflügels oder eines Fensterflügels, mit den Merkmalen des Anspruchs 1 gelöst. Vorteilhafte Weiterbildungen der Antriebseinrichtung sind in den abhängigen Ansprüchen, der Beschreibung und in den Figuren angegeben.

Besonders vorteilhaft wird eine Antriebseinrichtung zum Bewegen eines Flügels, insbesondere eines Türflügels oder eines Fensterflügels aufgezeigt. Die Antriebseinrichtung weist ein Motor-Getriebe-Modul auf, das ein Motor-Getriebe-Gehäuse, eine elektrische Maschine mit einer Maschinenachse, ein Getriebe mit einer um eine Abtriebsachse drehbar gelagerten Abtriebswelle zur Verbindung mit einem Hebel hat. Die Antriebseinrichtung weist auch ein Schließer-Modul auf, aufweisend ein Schließer-Gehäuse sowie einen mechanischen Energiespeicher. Die Antriebseinrichtung weist ein Schnittstellenelement zur Ausbildung einer Wirkverbindung zwischen dem Motor-Getriebe-Modul und dem Schließer-Modul auf.

Mit der Erfindung wird so eine kompakte Antriebseinrichtung zur Verfügung gestellt, wobei zudem vorteilhaft noch eine Modularität gegeben ist, was bedeutet, dass die Antriebseinrichtung modular aufgebaut ist, so dass einzelne Module losgelöst von den anderen Modulen nutzbar sind. Auch eine nachträgliche Montage von Modulen der erfindungsgemäßen Antriebseinrichtung an bestehende Antriebseirichtungen ist möglich. Die modulare Ausgestaltung wird im Sinne der Erfindung auch dadurch erreicht, dass sowohl das Motor-Getriebe-Modul als auch das Schließer-Modul jeweils in eigenen separaten Gehäusen aufgenommen sind. Das Schließer- Gehäuse und das Motor-Getriebe-Gehäuse, also die Module können noch von einem die Module umfassenden übergeordneten Gehäuse umgeben sein. Die Begriffe übergeordnetes Gehäuse und übergeordnete Verkleidung werden im Folgenden synonym verwendet.

Dabei dient der Hebel zur Ausbildung einer Verbindung der Antriebseinrichtung mit dem Flügel oder mit einer Zarge, wobei die Antriebseinrichtung wahlweise an der Zarge oder an dem Flügel montierbar ist. Von dem Begriff Zarge wird im Sinne der Erfindung auch ein Türrahmen oder Fensterrahmen umfasst. Insbesondere kann der Hebel derart ausgebildet sein, dass eine Spannungsversorgung der elektrischen Maschine und/oder zumindest ein Steuerungssignal für die elektrische Maschine über den Hebel an das Motor-Getriebe-Modul, insbesondere an die elektrische Maschine, übertragbar sind.

Insbesondere kann der mechanische Energiespeicher eine oder mehrere Druckfedern und/oder Zugfedern umfassen, die über einen Laschenwagen mit einem Übersetzungselement zur Übersetzung der linearen Bewegung des Energiespeichers in eine Drehbewegung des Übersetzungselements verbunden sind. Insbesondere kann das Übersetzungselement als Kurvenscheibe, besonders bevorzugt als herzförmige Hubkurvenscheibe, ausgebildet sein, worauf weiter unten noch eingegangen wird.

Insbesondere kann das Motor-Getriebe-Modul und/oder das Schließer-Modul zumindest teilweise, insbesondere vollständig, innerhalb des übergeordneten Gehäuses angeordnet sein. Insbesondere kann das Motor-Getriebe-Gehäuse mit dem übergeordneten Gehäuse kraftschlüssig und/oder formschlüssig und/oder stoffschlüssig verbunden sein. Insbesondere kann das Schließer-Gehäuse mit dem übergeordneten Gehäuse kraftschlüssig und/oder formschlüssig und/oder stoffschlüssig verbunden sein. Insbesondere kann eine oder mehrere derartige Verbindungen in Form zumindest einer Verschraubung und/oder einer Verstiftung und/oder einer Presspassung und/oder einer T-Nut und/oder einer Schnappverbindung ausgeführt sein.

Insbesondere kann die elektrische Maschine als Motor und/oder Generator ausgebildet sein. Als Motor kann die Maschine aus elektrischer Energie eine Drehbewegung, insbesondere ein Drehmoment, erzeugen. Als Generator kann die Maschine aus einer Drehbewegung, insbesondere aus einem Drehmoment, elektrische Energie erzeugen.

Mit der Maschinenachse ist die Drehachse gemeint, um welche sich ein Rotor der elektrischen Maschine dreht.

Insbesondere kann das Getriebe zumindest teilweise, insbesondere vollständig, in einem Raum zwischen der Abtriebsachse und der Maschinenachse der elektrischen Maschine angeordnet sein. Insbesondere können die elektrische Maschine und das Getriebe zumindest teilweise, insbesondere vollständig, innerhalb des Motor-Getriebe-Gehäuses angeordnet sein. Insbesondere kann der mechanische Energiespeicher zumindest teilweise, insbesondere vollständig, innerhalb des Schließer-Gehäuses angeordnet sein.

Dabei bedeutet die Formulierung - innerhalb des Gehäuses -, dass die Elemente zumindest teilweise, insbesondere vollständig, in dem vom Gehäuse gebildeten Raum angeordnet sind.

Insbesondere kann das Schnittstellenelement dabei in Wirkverbindung, insbesondere in Eingriff, mit dem Getriebe und in Wirkverbindung mit dem Energiespeicher stehen. Mittels des Schnittstellenelements ist ein Drehmoment von der Abtriebswelle auf das Schließer-Modul und/oder von dem Schließer-Modul auf die Abtriebswelle übertragbar. Das Schnittstellenelement kann dabei mittels zumindest eines Getriebeelementes des Getriebes und/oder mittels zumindest eines Elements des Schließer-Moduls und/oder durch ein zusätzliches Element gebildet werden. Das Schnittstellenelement kann einteilig oder mehrteilig ausgeführt sein.

Bevorzugt kann die Antriebseinrichtung in einem Drehflügelantrieb vorgesehen sein. Bei einem Drehflügelantrieb wird ein Flügel von einer Schließstellung, in der der Flügel an einem Rahmen oder einer Zarge anliegt, zu einer Offenstellung um eine Flügelachse mittels der Antriebseinrichtung verschwenkt, wobei das Drehmoment mittels eines Hebels von der Abtriebswelle der Antriebseinrichtung auf die Tür oder auf die Zarge übertragen wird. Die Antriebseinrichtung kann dabei am Flügel, wobei eine Laufschiene an der Zarge angeordnet werden kann, oder an der Zarge, wobei an dem Flügel eine Laufschiene angeordnet sein kann, montiert werden. Der Drehflügelantrieb kann dabei neben der Antriebseinrichtung auch den Hebel und/oder die Laufschiene und/oder den Flügel umfassen. Insbesondere beim Einsatz an Brandschutzflügeln kann die Antriebseinrichtung dabei ein Schließer-Modul aufweisen. Im Brandfalle ist mittels des Schließer-Moduls ein Schließen des Brandschutzflügels, insbesondere frei von manueller Betätigung sichergestellt.

Erfindungsgemäß ist vorgesehen, dass die Abtriebswelle in einem Bauraum zwischen der Maschinenachse und dem Energiespeicher angeordnet ist. Der Bauraum weist dabei eine Breite, eine Höhe und eine Tiefe auf, wobei die Breite von einem Abstand zwischen der Maschinenachse und dem Energiespeicher begrenzt wird. Insbesondere können die Höhe und/oder die Tiefe des Bauraums von dem Motor-Getriebe-Gehäuse oder von dem Getriebe oder von der elektrischen Maschine oder von dem Energiespeicher oder von dem Schließer-Gehäuse begrenzt werden.

Die Abtriebswelle kann insbesondere zumindest teilweise, bevorzugt vollständig, innerhalb des Motor-Getriebe-Gehäuses angeordnet sein. Insbesondere kann die Abtriebswelle zumindest teilweise, bevorzugt vollständig, innerhalb des Schließer-Gehäuses angeordnet sein.

In weiter bevorzugter Ausgestaltung kann vorgesehen sein, dass das Motor-Getriebe-Gehäuse eine erste Öffnung umfasst und das Schließer-Gehäuse eine zweite Öffnung umfasst. Das Motor-Getriebe-Gehäuse und das Schließer-Gehäuse können derart zueinander angeordnet sein, dass durch die erste und die zweite Öffnung das Schließer-Modul, insbesondere der Energiespeicher, und das Getriebe, insbesondere die Abtriebswelle, mittels des Schnittstellenelements miteinander in Wirkverbindung stehen.

Insbesondere können dabei Wände der jeweiligen Gehäuse, welche die erste und die zweite Öffnung umfassen, derart ausgeführt sein, dass das Motor-Getriebe-Gehäuse und das Schließer-Gehäuse bündig aneinander montiert werden können.

In noch weiter bevorzugter Ausgestaltung kann vorgesehen sein, dass das Schnittstellenelement in das Motor-Getriebe-Gehäuse und/oder in das Schließer-Gehäuse hineinragt. Insbesondere kann vorgesehen sein, dass das Schnittstellenelement in den von dem jeweiligen Gehäuse gebildeten Raum hineinragt.

In günstiger Ausgestaltung kann vorgesehen sein, dass das Schnittstellenelement zumindest ein Zahnrad aufweist. Insbesondere kann das Schnittstellenelement mehrere Zahnräder aufweisen, worauf weiter unten noch mal eingegangen wird.

In vorteilhafter Ausführung des erfindungsgemäßen Gedankens kann das Motor-Getriebe-Gehäuse mit dem Schließer-Gehäuse kraftschlüssig und/oder formschlüssig und/oder stoffschlüssig verbunden sein. Eine solche Verbindung kann beispielhaft insbesondere mittels zumindest einer Verschraubung und/oder einer Verstiftung und/oder einer Presspassung und/oder T-Nut und/oder einer Schnappverbindung bewirkt werden.

Erfindungsgemäß ist vorgesehen, dass die Abtriebsachse parallel oder koaxial zu der Maschinenachse verläuft.

Erfindungsgemäß ist vorgesehen, dass das Schließer-Modul das Übersetzungselement zur Übersetzung einer linearen Bewegung des Energiespeichers in eine Drehbewegung des Übersetzungselements um eine Drehachse des Übersetzungselements umfasst. Weiterhin ist vorgesehen, dass die Abtriebsachse und die Drehachse des Übersetzungselements beabstandet voneinander, parallel zueinander, verlaufen.

Einerseits drehen sich die Abtriebswelle und das Übersetzungselement dadurch nicht um dieselbe Drehachse und können an unterschiedlichen Positionen, insbesondere modular, angeordnet werden. Andererseits werden durch den parallelen Verlauf Energieverluste reduziert und die Montage erleichtert.

Insbesondere kann das Übersetzungselement als Kurvenscheibe ausgebildet sein. Das Übersetzungselement kann symmetrisch oder asymmetrisch, insbesondere als herzförmige Hubkurvenscheibe ausgebildet sein.

Erfindungsgemäß umfasst das Schließer-Modul ein Schließer-Rad, insbesondere Schließer-Zahnrad, wobei das Schließer-Rad koaxial, bevorzugt drehfest, zu dem Übersetzungselement angeordnet ist. Bevorzugt kann sein, dass das Übersetzungselement und das Schließer-Rad formschlüssig und/oder kraftschlüssig und/oder stoffschlüssig verbunden sind, besonders bevorzugt einstückig ausgebildet sind.

Insbesondere kann das Übersetzungselement zumindest teilweise, insbesondere vollständig, innerhalb des Schließer-Gehäuses angeordnet sein.

Erfindungsgemäß ist das Schnittstellenelement zumindest teilweise von dem Schließer-Rad, insbesondere Schließer-Zahnrad, gebildet oder steht mit dem Schließer-Rad in Eingriff, wobei das Schließer-Rad koaxial, bevorzugt drehfest, zu dem Übersetzungselement zur Übersetzung der linearen Bewegung des Energiespeichers in eine Drehbewegung des Übersetzungselements angeordnet ist. Insbesondere kann vorgesehen sein kann, dass das Übersetzungselement und das Schließer-Rad formschlüssig und/oder kraftschlüssig und/oder stoffschlüssig verbunden sind, bevorzugt einstückig ausgebildet sind.

Das Schließer-Rad und das Übersetzungselement können dabei jeweils oder gemeinsam um eine gemeinsame Drehachse drehbar gelagert sein. Ferner können das Schließer-Rad und das Übersetzungselement jeweils oder gemeinsam an einem fixierten Achskörper mittels eines oder mehrerer Drehlager, insbesondere Wälzlager oder Gleitlager, insbesondere Nadellager oder Kugellager, drehbar gelagert sein. Insbesondere können das Übersetzungselement und das Schließer-Rad kraftschlüssig und/oder formschlüssig und/oder stoffschlüssig miteinander drehfest verbunden oder einstückig ausgebildet sein. Diese Ausgestaltung spart Raum in axialer Ausdehnung betrachtet, insbesondere indem die Lager von dem Übersetzungselement und/oder von dem Schließer-Zahnrad umgeben angeordnet werden können.

Insbesondere kann das Schließer-Rad zumindest teilweise, insbesondere vollständig, innerhalb des Schließer-Gehäuses angeordnet sein.

Insbesondere kann das Schließer-Modul eine Verkleidung, also das Schließer-Gehäuse und den Laschenwagen zur Ausbildung einer Wirkverbindung zwischen dem mechanischen Energiespeicher und dem Übersetzungselement aufweisen. Der Laschenwagen kann mittels zumindest eines oder mehrerer Gleitelemente an der Verkleidung des Schließer-Moduls, also an dem Schließer-Gehäuse linear geführt sein. Bevorzugt kann das Gleitelement plattenförmig ausgebildet sein. Insbesondere kann jedes Gleitelement in einer Gleitführung des Schließer-Gehäuses beweglich angeordnet sein.

Insbesondere die lineare Führung des Laschenwagens und die Aufnahme der Linearkräfte quer zur Laufrichtung des Laschenwagens sind dabei vorteilhaft im Sinne der Erfindung.

Insbesondere kann die Verkleidung, also das Schließer-Gehäuse einteilig oder mehrteilig ausgeführt sein. Insbesondere kann die Verkleidung, also das Schließer-Gehäuse eine Bodenwand und/oder zwei Stirnwände aufweisen, wobei der Laschenwagen an der Bodenwand und/oder an einer Stirnwand oder an beiden Stirnwänden linear geführt ist. Insbesondere können die Stirnwände der Verkleidung, also des Schließer-Gehäuses parallel zu dem Flügel in seiner Schließstellung verlaufen. Insbesondere können dabei die Gleitelemente parallel zu den Stirnwänden angeordnet sein.

Insbesondere kann das Gleitelement oder die Gleitelemente als Gleitkufe oder als Gleitkufen ausgebildet sein. Insbesondere kann das Gleitelement und/oder die Gleitführung zumindest an jeweiligen Kontaktflächen beschichtet, insbesondere mittels einer reibungsmindernden Beschichtung beschichtet, sein. Insbesondere kann das Gleitelement oder die Gleitelemente und der Laschenwagen formschlüssig und/oder kraftschlüssig und/oder stoffschlüssig verbunden sein, besonders bevorzugt einstückig ausgebildet sein.

Erfindungsgemäß weist das Getriebe ein mit der Abtriebswelle koaxiales, bevorzugt drehfestes, Abtriebsrad, insbesondere Abtriebszahnrad, auf. Insbesondere kann das Abtriebsrad und die Abtriebswelle formschlüssig und/oder kraftschlüssig und/oder stoffschlüssig verbunden sein, bevorzugt einstückig ausgebildet sein. Erfindungsgemäß weist das Getriebe das mit der Abtriebswelle koaxiale, insbesondere drehfeste, Abtriebsrad, insbesondere Abtriebszahnrad auf, wobei das Abtriebsrad in Eingriff mit dem Schnittstellenelement steht oder zumindest einen Teil des Schnittstellenelements bildet.

Insbesondere kann das Schnittstellenelement ein Bauteil, bevorzugt ein Rad, besonders bevorzugt ein Zahnrad, aufweisen, wobei das Bauteil in unmittelbarer Wirkverbindung mit dem Schließer-Rad und dem Abtriebsrad steht. Insbesondere kann das Bauteil ein Riemen, eine Kette oder ein Seil sein.

In noch weiter bevorzugter Ausgestaltung kann das Schließer-Modul das Übersetzungselement zur Übersetzung einer linearen Bewegung des Energiespeichers in eine Drehbewegung des Übersetzungselements um eine Drehachse des Übersetzungselements aufweisen, wobei ein Übersetzungsverhältnis von dem Übersetzungselement zu der Abtriebswelle im Bereich von 0,6 bis 1,1, bevorzugt im Bereich von 0,65 bis 1,05, besonders bevorzugt im Bereich von 0,7 bis 1,0, insbesondere 0,75 bis 0,9 liegt.

Mit dem Übersetzungsverhältnis ist hierbei der Quotient aus einer Drehzahl des Übersetzungselements als Dividend und einer Drehzahl der Abtriebswelle oder der Quotient aus einem Drehmoment des Übersetzungselements als Dividend und einem Drehmoment der Abtriebswelle gemeint.

In weiter bevorzugter Ausführung kann vorgesehen sein, dass das Motor-Getriebe-Gehäuse oder das Schließer-Gehäuse eine erste Wand mit einer Abtriebsöffnung zur insbesondere drehfesten Verbindung der Abtriebswelle mit dem Hebel, eine zweite an die erste Wand angrenzende Wand und eine dritte der zweiten Wand gegenüberliegende Wand aufweist, wobei die Antriebseinrichtung derart ausgebildet ist, sowohl mit der zweiten Wand als auch mit der dritten Wand zugewandt zu dem Flügel befestigt zu werden.

Insbesondere das Motor-Getriebe-Gehäuse und das Schließer-Gehäuse können jeweils quaderförmig ausgebildet sein. Hierbei kann das Motor-Getriebe-Gehäuse und/oder das Schließer-Gehäuse quaderförmig, d.h. mit vier angrenzenden Wänden, ausgebildet sein, wobei die angrenzenden Wände orthogonal zueinander stehen. Auf diese Weise ist die Antriebseinrichtung beidseitig montierbar.

Insbesondere kann die Antriebseinrichtung auf einer Bandseite als auch auf einer Bandgegenseite des Flügels und/oder sowohl bei links als auch bei rechts drehenden Flügeln montiert werden. Damit ist die Antriebseinrichtung flexibler einsetzbar und somit an unterschiedliche Montagebedingungen anpassbar. Hierzu kann die Antriebseinrichtung zu einer entlang einer parallel zum geschlossenen Flügel verlaufenden vertikalen Ebene symmetrisch ausgebildet sein. Ferner kann hierzu die Abtriebswelle aus einer Nullstellung heraus in beide Drehrichtungen drehbar gelagert sein. Ferner kann die Abtriebswelle dabei bezüglich ihres axialen Verlaufs beidseitig mit einem Hebel zur Verbindung mit dem Flügel oder mit einer Zarge verbindbar ausgeführt sein. Ferner kann eine vierte der ersten Wand des Motor-Getriebe-Gehäuses gegenüberliegende Wand des Motor-Getriebe-Gehäuses eine weitere Abtriebsöffnung aufweisen. Dadurch können beide Enden des axialen Verlaufs der Abtriebswelle mit einem Hebel zur Verbindung mit dem Flügel oder mit der Zarge drehfest verbunden werden. Insbesondere kann der Hebel als Scherengestänge ausgeführt sein.

Insbesondere kann das Getriebe als Zahnradgetriebe, bevorzugt als insbesondere mehrstufiges Stirnradgetriebe und/oder als Planetengetriebe oder als Exzentergetriebe ausgebildet sein.

Insbesondere kann das Getriebe als eine Kombination aus Planetengetriebe und Stirnradgetriebe ausgebildet sein. Dabei kann ein Hohlrad des Planetengetriebes eine Außenverzahnung aufweisen und als Stirnrad agieren, insbesondere wobei das Hohlrad in Eingriff mit dem Schließer-Rad des Schließer-Moduls und/oder dem Schnittstellenelement steht und/oder wobei das Hohlrad das Schnittstellenelement bildet.

Als Planetengetriebe kann das Getriebe ein mit dem Rotor drehfestes, insbesondere einstückiges, Sonnenrad, mehrere um das Sonnenrad an einem Planetenträger befestigte Planetenräder und ein mit den Planeten in Eingriff stehendes Hohlrad aufweisen. Dabei kann das Hohlrad drehbar gelagert sein und den Leistungsausgang des Planetengetriebes bilden, wobei der Planetenträger feststehend ausgeführt ist. Alternativ kann der Planetenträger drehbar gelagert sein und den Leistungsausgang des Planetengetriebes bilden, wobei das Hohlrad feststehend ausgeführt ist. Die Begriffe Planet und Planetenrad werden synonym verwendet.

Als Planetengetriebe kann das Getriebe ferner zumindest eine Wolfromstufe aufweisen. In einer bevorzugten Ausführungsform einer derartigen Wolfromstufe weist das Planetengetriebe eine erste Getriebestufe und eine zweite Getriebestufe auf, wobei die erste Getriebestufe ein Sonnenrad, mehrere erste an einem Planetenträger befestigten, von dem Sonnenrad angetriebenen Planeten und ein erstes feststehendes Hohlrad umfasst und die zweite Getriebestufe ein zweites drehbares Hohlrad, zweite mit den ersten Planeten drehfeste, insbesondere einstückige Planeten umfasst, wobei die zweiten Planeten das zweite Hohlrad antreiben. Insbesondere kann das zweite Hohlrad dabei den Leistungsausgang des Planetengetriebes bilden.

Als Exzentergetriebe kann das Getriebe als Planeten-Exzentergetriebe und/oder Wellgetriebe ausgeführt sein.

Insbesondere kann das Schnittstellenelement in Eingriff mit einem Zahnrad, insbesondere Hohlrad, des Getriebes stehen, wobei insbesondere vorgesehen sein kann, dass das Zahnrad des Getriebes eine Außenverzahnung aufweist. Insbesondere kann dabei die Außenverzahnung mit dem Schließer-Rad in Wirkverbindung oder in Eingriff stehen, wobei das Schließer-Rad in Wirkverbindung oder drehfest mit dem Übersetzungselement, insbesondere formschlüssig und/oder kraftschlüssig und/oder stoffschlüssig verbunden oder einstückig ausgebildet angeordnet sein kann.

In weiter bevorzugter Ausgestaltung kann vorgesehen sein, dass die Antriebseinrichtung ein Steuerungsmodul mit einer Steuerungseinrichtung aufweist, wobei bevorzugt sein kann, dass das Steuerungsmodul zumindest teilweise, insbesondere vollständig, innerhalb der übergeordneten Verkleidung, also innerhalb des übergeordneten Gehäuses der Antriebseinrichtung angeordnet ist.

Insbesondere kann ein Steuerungsmodul in oder an dem Schließer-Modul angeordnet sein.

Noch weiter bevorzugt ist, dass das Motor-Getriebe-Modul und/oder das Schließer-Modul und/oder das Steuerungsmodul zumindest teilweise, insbesondere vollständig, innerhalb der übergeordneten Verkleidung, also innerhalb des übergeordneten Gehäuses angeordnet sind.

Insbesondere kann das Steuerungsmodul ein Steuerungsgehäuse aufweisen. Die Steuerungseinrichtung kann vollständig innerhalb des Steuerungsgehäuses angeordnet sein. Insbesondere kann das Steuerungsgehäuse mit dem übergeordneten Gehäuse und/oder mit dem Motor-Getriebe-Gehäuse und/oder mit dem Schließer-Gehäuse kraftschlüssig und/oder formschlüssig und/oder stoffschlüssig verbunden sein. Insbesondere kann eine oder mehrere derartige Verbindungen in Form zumindest einer Verschraubung und/oder einer Verstiftung und/oder einer Presspassung und/oder einer T-Nut und/oder einer Schnappverbindung ausgeführt sein.

Insbesondere kann das Motor-Getriebe-Gehäuse eine oder mehrere vorgefertigte Aufnahmestellen zur formschlüssigen und/oder kraftschlüssigen und/oder stoffschlüssigen Verbindung mit der elektrischen Maschine und/oder dem Getriebe und/oder der Abtriebswelle aufweisen. Insbesondere kann das Schließer-Gehäuse eine oder mehrere vorgefertigte Aufnahmestellen zur formschlüssigen und/oder kraftschlüssigen und/oder stoffschlüssigen Verbindung mit dem Schließer-Rad und/oder dem Übersetzungselement und/oder dem Achskörper und/oder dem Laschenwagen aufweisen.

Eine bevorzugte Ausgestaltung sieht vor, dass die elektrische Maschine als Axialflussmaschine ausgebildet ist. Bei der Axialflussmaschine wird der magnetische Fluss hauptsächlich parallel zu der Maschinenachse der elektrischen Maschine gebildet. Die Axialflussmaschine weist eine im Vergleich zu anderen Maschinentypen geringe axiale Baulänge auf. Unter der axialen Baulänge wird eine Baulänge in einer zu der Maschinenachse parallelen Richtung verstanden. Die Verwendung einer Axialflussmaschine ermöglicht daher eine Reduktion der Abmessungen der elektrischen Maschine in axialer Richtung. Hierdurch kann eine kompakte Ausgestaltung des Motor-Getriebe-Moduls ermöglicht werden. Insbesondere kann es sich bei der Axialflussmaschine um eine bürstenlose Gleichstrommaschine, insbesondere eine sogenannte BLDC-Maschine, handeln. Eine derartige Maschine ist wie eine Drehstrom-Synchronmaschine mit Erregung durch Permanentmagnete aufgebaut. Die Axialflussmaschine kann als Motor und/oder Generator ausgebildet sein. Als Motor kann die Axialflussmaschine eine Drehbewegung und/oder ein Drehmoment aus elektrischer Energie erzeugen. Als Generator kann die Axialflussmaschine aus einer Drehbewegung und/oder aus einem Drehmoment elektrische Energie erzeugen.

Insbesondere kann die elektrische Maschine, insbesondere als Motor, ein Verhältnis aus dem maximalen Drehmoment zu der axialen Erstreckung der Maschine aufweisen, das größer ist als 30 Nm/m, bevorzugt größer ist als 100 Nm/m, besonders bevorzugt größer ist als 200 Nm/m. Die axiale Erstreckung ist parallel zur Maschinenachse. Insbesondere kann dieses Verhältnis größer als 50 Nm/m, bevorzugt größer als 70 Nm/m, besonders bevorzugt größer als 150 Nm/m, sein. Insbesondere kann die elektrische Maschine eine Drehmomentdichte, also Drehmoment zu Motorvolumen, von größer oder gleich 6000 Nm/m^3, bevorzugt von größer oder gleich 15000 Nm/m^3 und besonders bevorzugt von größer oder gleich 20000 Nm/m^3 und/oder eine Drehmomentkonstante von größer oder gleich 0,1 Nm/A, bevorzugt von größer oder gleich 0,2 Nm/A und besonders bevorzugt von größer oder gleich 0,3 Nm/A aufweisen. Diese Ausgestaltung ermöglicht einen kompakten Aufbau des Getriebes und kleine Übersetzungsverhältnisse, wobei dennoch ein zuverlässiges Schließen der Tür ermöglicht wird. Dabei kann die Antriebseinrichtung ferner insgesamt kompakt bauen.

Insbesondere kann die elektrische Maschine, bevorzugt in der Ausgestaltung als Axialflussmaschine einen einzigen Stator und einen, insbesondere einzigen, um eine Maschinenachse gegenüber dem Stator drehbaren Rotor aufweisen. Insbesondere der Stator kann eine oder mehrere Spulen, bevorzugt 7 bis 16, besonders bevorzugt 10 bis 14 Spulen aufweisen, wobei die Spule oder die Spulen des Stators derart angeordnet sind, dass durch die Spule oder die Spulen ein magnetischer Fluss in einer Richtung parallel zu der Maschinenachse erzeugbar ist.

Mit dem Begriff der Spule ist ein elektrischer Leiter mit zumindest einer Wicklung gemeint. Der elektrische Leiter kann dabei als, insbesondere mittels einer Beschichtung, bevorzugt mittels eines Isolierlacks, isolierter Draht und/oder isoliertes Band ausgeführt sein. Hierzu kann der Leiter eine Isolierbeschichtung, insbesondere einen Isolierlack, aufweisen. Insbesondere kann die Spule als vergossene Spule ausgebildet sein, wobei einzelne Wicklungen der Spule mittels eines Vergussmaterials voneinander elektrisch isoliert sind.

Insbesondere kann der Rotor zumindest einen Permanentmagnet aufweisen, wobei der Permanentmagnet entlang eines virtuellen Kreises um die Maschinenachse angeordnet ist und einen ersten Winkelbereich aufspannt, wobei der Stator einen Statorsockel mit zumindest einem von dem Statorsockel, insbesondere in axialer Richtung der Axialflussmaschine, abstehenden Statorzahn aufweist, und wobei der Statorzahn entlang eines virtuellen Kreises um die Maschinenachse angeordnet ist und einen zweiten Winkelbereich aufspannt, wobei das Verhältnis des ersten Winkelbereichs als Dividend zu dem zweiten Winkelbereich im Bereich von 1,1 bis 1,6, bevorzugt im Bereich von 1,2 bis 1,5, besonders bevorzugt im Bereich von 1,3 bis 1,4, liegt.

Bei mehreren Zähnen und/oder Magneten kann jeder Zahn zu jedem Magneten das oben genannte Verhältnis aufweisen. Alternativ oder kumulativ kann bei mehreren Magneten und Zähnen ein summierter Bereich also ein Verhältnis in einem Bereich von 1,3 bis 1,9 oder sogar von 1,5 bis 1,8 liegen.

In Sinne der Erfindung bedeutet Kreis um Maschinenachse, dass die Maschinenachse den Mittelpunkt des Kreises bildet.

Dabei kann eine parallel zum Statorsockel verlaufende Fläche des Statorzahns, insbesondere jeden Statorzahns, derart ausgeführt sein, dass sich die Fläche in radialer Richtung des Stators ausgehend von der Maschinenachse erweitert.

Alternativ oder kumulativ kann eine parallel zum Statorsockel verlaufende Fläche des Permanentmagnets, insbesondere jedes Permanentmagnets, derart ausgeführt sein, dass sich die Fläche in radialer Richtung des Rotors ausgehend von der Maschinenachse erweitert. Auf diese Weise können das angegebene Verhältnis des ersten Winkelbereichs als Dividend zu dem zweiten Winkelbereich entlang des radialen Verlaufes des Stators konstant gehalten werden. Insbesondere kann die parallel zum Statorsockel verlaufende Fläche des Statorzahns, insbesondere jeden Statorzahns, entlang des axialen Verlaufes des Statorzahns konstant bleiben.

Insbesondere kann zumindest ein, insbesondere jeder, Permanentmagnet plattenförmig ausgebildet sein. Insbesondere kann der Rotor eine Rotorplatte, insbesondere Rotorscheibe aufweisen. Ferner kann zumindest ein, insbesondere jeder, Permanentmagnet von der Rotorplatte des Rotors in axialer Richtung der Maschine, insbesondere in Richtung zu dem Stator, abstehen. Insbesondere kann die Rotorplatte eine oder mehrere Vertiefungen, insbesondere eine der Anzahl der Permanentmagneten entsprechende Anzahl an Vertiefungen, aufweisen, wobei in jeweils einer Vertiefung ein Permanentmagnet einliegt. Insbesondere kann dabei die Form der Vertiefung, insbesondere jeder Vertiefung, der Form des einliegenden Permanentmagneten entsprechen. Dies dient zur Sicherung der Permanentmagnete auf dem Rotor, insbesondere auf der Rotorplatte.

Insbesondere kann das Verhältnis zwischen der Anzahl der Permanentmagnete als Dividend und der Anzahl der Spulen in einem Bereich von 1,0 bis 1,6, bevorzugt in einem Bereich von 1,2 bis 1,4 liegt, besonders bevorzugt 4/3 sein. Insbesondere kann das Verhältnis zwischen der Anzahl der Permanentmagnete als Dividend und der Anzahl der Spulen 1,1 sein. Insbesondere kann das Verhältnis zwischen der Anzahl der Permanentmagnete als Dividend und der Anzahl der Spulen 7/6 sein.

Insbesondere kann die elektrische Maschine in der Ausgestaltung als Axialflussmaschine ein Verhältnis zwischen der Erstreckung zumindest eines Statorzahns in axialer Richtung der Maschine als Dividend und der Erstreckung des Statorsockels in axialer Richtung der Maschine aufweisen, wobei das Verhältnis größer oder gleich 2, insbesondere größer oder gleich 3, insbesondere größer oder gleich 4, insbesondere größer oder gleich 5, insbesondere größer oder gleich 6 sein kann.

Insbesondere kann der Stator einen Statorsockel aufweisen, der einen, insbesondere plattenförmigen, Sockelabschnitt und mehrere von einer gemeinsamen Oberfläche des Sockelabschnitts, insbesondere in axialer Richtung der Maschine, abstehende Statorzähne aufweist. Bevorzugt ist, dass um zumindest einen, insbesondere jeden, Statorzahn, zumindest eine Spule mittelbar oder unmittelbar gewickelt ist. Insbesondere kann zumindest ein Statorzahn einen Zahnmantel aufweisen, wobei um den Zahnmantel die Spule angeordnet sein kann. Insbesondere kann der Zahnmantel elektrisch isolierend sein, bevorzugt zumindest teilweise aus einem Kunststoff bestehen, besonders bevorzugt als Spritzgussbauteil ausgebildet sein.

Insbesondere der Stator für die elektrische Maschine, bevorzugt der Axialflussmaschine zum Bewegen des Flügels, insbesondere des Türflügels oder des Fensterflügels, mit dem, insbesondere plattenförmigen, Statorsockel, und mehreren von einer gemeinsamen Oberfläche des Sockelabschnitts, insbesondere in axialer Richtung der Axialflussmaschine, weist abstehende Statorzähne auf, wobei der Statorsockel eine Lageraufnahme zur Aufnahme eines Wälzlagers oder eines Gleitlagers aufweist.

Diese Ausgestaltung ist vorteilhaft hinsichtlich der kompakten Bauweise in axialer Richtung.

Insbesondere können die Statorzähne formschlüssig und/oder kraftschlüssig und/oder stoffschlüssig mit dem Statorsockel verbunden sein.

Insbesondere die Lageraufnahme kann eine, insbesondere ringförmige, Lagerauflagefläche aufweisen, die formschlüssig und/oder kraftschlüssig und/oder stoffschlüssig mit dem Statorsockel verbunden ist oder einstückig mit dem Statorsockel ausgebildet ist. Die Lagerauflagefläche bezeichnet eine Fläche, auf oder an der das Lager anliegen kann. Insbesondere kann die Lageraufnahme zylindrisch, insbesondere hohlzylindrisch, ausgebildet sein.

Insbesondere kann der Stator einen feststehenden Bolzen aufweisen, wobei der Bolzen formschlüssig und/oder kraftschlüssig und/oder stoffschlüssig mit dem Stator verbunden oder einstückig ausgebildet sein kann und die Lageraufnahme aufweisen kann.

Insbesondere kann das Getriebe ein erstes koaxial mit der Maschinenachse drehbares Getriebeelement aufweisen, insbesondere kann das erste Getriebeelement drehfest mit dem Rotor verbunden sein. Diese Ausgestaltung ist vorteilhaft hinsichtlich der Bauraumeinsparung in radialer Richtung der elektrischen Maschine.

Insbesondere kann das Getriebe ein zweites Getriebeelement aufweisen, welches mit dem ersten Getriebeelement wirkverbunden ist, wobei eine Drehachse des zweiten Getriebeelements in einem Bauraum zwischen der Maschinenachse und einer virtuell in axialer Richtung der Maschine verlängerten äußeren Mantelfläche des Rotors oder einer virtuell in axialer Richtung der Maschine verlängerte äußere Mantelfläche des Stators, insbesondere parallel zu der Maschinenachse, verläuft. Durch diese Ausgestaltung ergeben sich eine weitere Bauraumeinsparung in radialer Richtung der elektrischen Maschine.

Insbesondere kann das erste Getriebeelement vollständig in einem Bauraum angeordnet sein, wobei der Bauraum durch eine virtuell in axialer Richtung der Maschine verlängerte äußere Mantelfläche des Rotors begrenzt wird.

Insbesondere können das erste und das zweite Getriebeelement oder das gesamte Getriebe vollständig in einem Bauraum angeordnet sein, wobei der Bauraum durch eine virtuell in axialer Richtung der Maschine verlängerte äußere Mantelfläche des Rotors oder durch eine virtuell in axialer Richtung der Maschine verlängerte äußere Mantelfläche des Stators begrenzt wird.

Insbesondere kann die Antriebseinrichtung ein Maschinen-Gehäuse und/oder ein Getriebe-Gehäuse und/oder das Motor-Getriebe-Gehäuse aufweisen, wobei die elektrische Maschine zumindest teilweise innerhalb des Maschinen-Gehäuses angeordnet sein kann, und wobei das Getriebe zumindest teilweise innerhalb des Motor-Getriebe-Gehäuses angeordnet sein kann. Alternativ oder kumulativ können die Maschine und/oder das Getriebe zumindest teilweise innerhalb des Motor-Getriebe-Gehäuses angeordnet sein. Insbesondere können das Maschinen-Gehäuse und/oder das Getriebe-Gehäuse von dem Motor-Getriebe-Gehäuses ausgebildet sein. Insbesondere kann das Maschinen-Gehäuse und/oder das Getriebe-Gehäuse vorgefertigte Aufnahmestellen zur formschlüssigen und/oder kraftschlüssigen und/oder stoffschlüssigen Verbindung untereinander aufweisen. Ferner können das Maschinen-Gehäuse und/oder das Getriebe-Gehäuse einstückig ausgebildet sein. Insbesondere können das Maschinen-Gehäuse und/oder das Motor-Getriebe-Gehäuse und/oder das Schließer-Gehäuse jeweils eine oder mehrere vorgefertigte Aufnahmestellen zur formschlüssigen und/oder kraftschlüssigen und/oder stoffschlüssigen Verbindung mit der elektrischen Maschine und/oder dem Getriebe aufweisen. Diese Ausgestaltungen sind vorteilhaft hinsichtlich einer einfachen und montagefreundlichen Bauweise: Diese Ausgestaltungen sind insbesondere vorteilhaft hinsichtlich der Modularität.

Insbesondere kann die elektrische Maschine zumindest teilweise, insbesondere vollständig, in einem Bauraum zwischen einer Flügelachse und der Abtriebsachse angeordnet sein. Insbesondere kann die elektrische Maschine zwischen der, insbesondere virtuell verlängerten, Nebenschließkante des Flügels und der Abtriebsachse angeordnet sein.

Der Flügel weist dabei eine der Flügelachse zugewandte Nebenschließkante und eine der Nebenschließkante gegenüberliegende Hauptschließkante auf, wobei die Hauptschließkante üblicherweise der Türklinke zugewandt ist.

Die elektrische Maschine befindet sich dadurch näher an der Flügelachse als die Abtriebswelle, sodass sich in Kombination mit einem Getriebe hierdurch günstige Übersetzungsverhältnisse von der Maschine zu der Abtriebswelle ergeben. Ferner kann eine derartige Antriebseinrichtung auf eine einfache Art und Weise mit dem mechanischen Energiespeicher eines Türschließers in Wirkverbindung gebracht werden, da aufgrund der Maschinenposition die Abtriebswelle der Hauptschließkante des Flügels zugewandt ist, insbesondere wobei ebenfalls günstige Übersetzungsverhältnisse von dem Türschließer zu der Abtriebswelle realisierbar sind. Ein derartiger Aufbau ermöglicht ferner eine Bauraumeinsparung dadurch, dass die Steuerungseinrichtung näher zur elektrischen Maschine anbringbar ist.

Mit den Begriffen Achse sowie Flügelachse und Abtriebsachse sind virtuelle Achsen gemeint, die in ihrer Erstreckung grundsätzlich nicht begrenzt sind.

Der Bauraum weist dabei eine Breite, eine Höhe und eine Tiefe auf, wobei die Breite von einem Abstand zwischen der Flügelachse und Abtriebswelle oder Getriebe begrenzt wird. Insbesondere können die Höhe und/oder die Tiefe des Bauraums von dem Motor-Getriebe-Gehäuse oder von dem Getriebe oder von der elektrischen Maschine begrenzt werden. Insbesondere können dabei die Flügelachse und/oder die Abtriebsachse einen im Wesentlichen vertikalen Verlauf aufweisen, insbesondere wobei die vertikale Komponente des Verlaufs 90 bis 100, insbesondere 95, Prozent beträgt.

Insbesondere kann das Getriebe zumindest teilweise in einem Bauraum zwischen der Abtriebsachse und der Maschinenachse angeordnet sein. Auf diese Weise kann das gewünschte Drehmoment und/oder die gewünschte Drehzahl auf eine einfache und/oder bauraumsparende Art und Weise von der elektrischen Maschine über das Getriebe auf die Abtriebswelle übertragen werden.

Insbesondere kann das Motor-Getriebe-Modul ein Motor-Getriebe-Gehäuse mit einer der Flügelachse zugewandten ersten Seitenwand und einer der Flügelachse abgewandten zweiten Seitenwand aufweisen, wobei die elektrische Maschine zumindest teilweise, bevorzugt vollständig, in einem Bauraum zwischen der ersten Seitenwand und der Abtriebsachse angeordnet ist. Insbesondere kann die elektrische Maschine vollständig innerhalb des Motor-Getriebe-Gehäuses angeordnet sein. Kabel etc. der elektrischen Maschine sind dabei nicht mit umfasst.

Insbesondere kann das Getriebe ein Übersetzungsverhältnis als Quotient aus der Drehzahl des Rotors als Dividend und der Drehzahl der Abtriebswelle aufweisen, wobei das Übersetzungsverhältnis kleiner ist als 125, bevorzugt kleiner ist als 100, besonders bevorzugt kleiner ist als 75. Diese Ausgestaltung ermöglicht einen kompakten Aufbau des Getriebes, wobei die Antriebseinrichtung insgesamt kompakter baut, und wobei eine Reibungsreduktion erreicht wird.

Insbesondere kann sein, dass die Antriebseinrichtung eine Platine aufweist und der Stator eine oder mehrere Spulen aufweist, wobei die Spulen mit der Platine elektrisch verbunden sind.

Eine Platine ist im Sinne der Erfindung ein plattenförmiges, insbesondere bestücktes, Element zur Leitung von elektrischer Energie. Die Platine kann als Leiterkarte ausgebildet sein. Die Begriffe werden im Folgenden synonym verwendet. Die Platine kann mehrere Schichten umfassen und/oder Kunststoff aufweisen und/oder flexibel ausgeführt sein. Insbesondere kann die Platine als massive Aluminiumleiterkarte ausgeführt sein. Diese Ausgestaltung ist hinsichtlich guter Wärmeleitungseigenschaften vorteilhaft.

Insbesondere kann dabei zumindest eine, insbesondere jede, Spule in oder auf der Platine integriert sein, insbesondere in dem Material der Platine, angeordnet sein.

Insbesondere kann die die elektrische Maschine in der Ausgestaltung als Axialflussmaschine eine Platine aufweisen, die in einem Bauraum zwischen dem Statorsockel und dem Rotor angeordnet ist, wobei zumindest eine, insbesondere jede, der Spulen, mit der Platine elektrisch verbunden ist.

Insbesondere kann die Spule mit der Platine verlötet sein. Insbesondere kann sich die Leiterkarte dabei zumindest teilweise über einen Bauraum erstrecken, der von einer in axialer Richtung der elektrischen Maschine verlängerten Mantelfläche des Stators und/oder von einer in axialer Richtung der elektrischen Maschine verlängerten Mantelfläche des Rotors begrenzt wird. Insbesondere kann die Platine parallel zu dem Statorsockel angeordnet sein.

Insbesondere kann der Stator den, insbesondere plattenförmigen, Statorsockel und mehrere von dem Statorsockel in axialer Richtung der Maschine abstehende Statorzähne aufweisen, wobei die Platine in einer ersten, insbesondere zu dem Statorsockel parallelen, Ebene angeordnet ist, wobei die erste Ebene in einem Zwischenraum zwischen den Statorzähnen und dem Rotor liegt. Insbesondere kann die Platine auf den Statorzähnen aufliegen. Insbesondere kann die Platine in einem Luftspalt zwischen Stator und Rotor angeordnet sein.

Insbesondere kann der Stator mehrere von dem Statorsockel in axialer Richtung der elektrischen Maschine abstehende Statorzähne aufweisen, wobei die Platine in einer zweiten, insbesondere zu dem Statorsockel parallelen, Ebene angeordnet ist, wobei die zweite Ebene von zumindest einem, insbesondere jedem Statorzahn, des Stators durchbrochen wird. Diese Ausgestaltung ist vorteilhaft hinsichtlich einer weiteren Bauraumeinsparung in axialer Richtung. Insbesondere kann die Platine einen oder mehrere Durchbrüche, insbesondere der Anzahl der Statorzähne entsprechende Anzahl von Durchbrüchen, aufweisen, welche von den Statorzähnen durchgriffen werden. Insbesondere kann die Form der jeweiligen Durchbrüche der Fläche der jeweiligen Zähne parallel zur Platine entsprechen. Insbesondere kann die Platine einen einzelnen Durchbruch für mehrere oder alle Zähne umfassen.

Gemäß einem weiteren Aspekt der Erfindung wird ein Verfahren angegeben zum Verschwenken des Flügels, insbesondere des Türflügels oder des Fensterflügels, von einer Schließstellung bei einem Öffnungswinkel von 0° zu einer Offenstellung bei einem Öffnungswinkel größer als 0° und/oder von der Offenstellung bei dem Öffnungswinkel größer als 0° zu der Schließstellung bei dem Öffnungswinkel von 0° mittels eines Flügel-Drehmoments, wobei das Flügel-Drehmoment ein, insbesondere von einer Person erzeugtes, manuelles Drehmoment und ein Antriebsdrehmoment umfasst. Das Antriebsdrehmoment wird mittels der Antriebseinrichtung mit dem Motor-Getriebe-Modul, dem Schließer-Modul und einem Steuerungsmodul erzeugt. Das Motor-Getriebe-Modul weist eine elektrische Maschine auf, umfassend den, insbesondere einzigen, Stator und den, insbesondere einzigen, Rotor. Das Schließer-Modul weist den, insbesondere mechanischen, Energiespeicher auf. Das Steuerungsmodul weist eine Steuerungseinrichtung auf. Das Antriebsdrehmoment umfasst ein mittelbar oder unmittelbar von der elektrischen Maschine erzeugtes Maschinenmoment und ein von dem Schließer-Modul erzeugtes Schließer-Moment. Das Maschinenmoment ist bei zumindest einem der Öffnungswinkel größer 0° größer als 0 Nm.

Insbesondere kann dies bei jedem Öffnungswinkel vorgesehen sein, der größer 0° ist.

Der Begriff Schließbewegung wird im Folgenden mit einer Bewegung von der Offenstellung zu der Schließstellung synonym verwendet. Der Begriff Öffnungsbewegung wird im Folgenden mit einer Bewegung von der Schließstellung zu der Offenstellung synonym verwendet.

Mit dem Begriff -moment sind mittelbar oder unmittelbar auf den Flügel ausgeübte Drehmomente gemeint.

Mit dem Maschinenmoment größer als 0 Nm ist dabei ein Betrag des Maschinenmoments gemeint. Auf diese Weise ist damit sowohl ein die Schließbewegung unterstützendes Maschinenmoment, insbesondere zusätzliches Schließmoment, als auch ein der Schließbewegung der Tür, insbesondere einem Schließer-Moment des Schließer-Moduls, entgegenwirkendes Bremsmoment gemeint.

Weitere Einzelheiten und Vorteile der Erfindung sollen nachfolgend anhand der in den Figuren gezeigten Ausführungsbeispiele erläutert werden. Hierin zeigt:
- Fig. 1: ein Ausführungsbeispiel einer Antriebseinrichtung gemäß der Erfindung in einer schematischen Schnittdarstellung;
- Fig. 2: die Antriebseinrichtung aus Figur 1 als Einzelheit in einer perspektivischen Ansicht;
- Fig. 3: ein Übersetzungselement als Einzelheit in einer Aufsicht,
- Fig. 4: ein weiteres Ausführungsbeispiel einer Antriebseinrichtung mit Planetengetriebe,
- Fig. 5: die Antriebseinrichtung aus Figur 4 mit entferntem Hohlrad; und
- Fig. 6: eine Axialflussmaschine in prinzipieller Darstellung im Schnitt.

In den unterschiedlichen Figuren sind gleiche Teile stets mit denselben Bezugszeichen versehen, weswegen diese in der Regel auch nur einmal beschrieben werden.

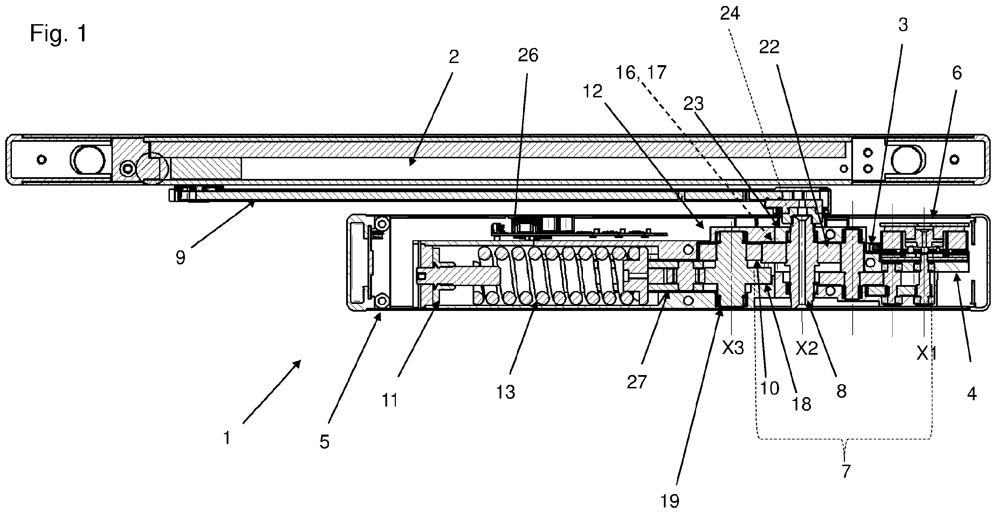

Figur 1 zeigt eine Antriebseinrichtung 1 zum Bewegen eines Flügels, insbesondere eines Türflügels oder eines Fensterflügels. Die Antriebseinrichtung 1 weist ein Motor-Getriebe-Modul 3 auf, das ein Motor-Getriebe-Gehäuse 4, eine elektrische Maschine 6 mit einer Maschinenachse X1, ein Getriebe 7 mit einer um eine Abtriebsachse X2 drehbar gelagerten Abtriebswelle 8 zur Verbindung mit einem Hebel 9 aufweist. Die Antriebseinrichtung 1 weist auch ein Schließer-Modul 11 auf, das ein Schließer-Gehäuse 12 sowie einen mechanischen Energiespeicher 13 aufweist. Die Antriebseinrichtung 1 weist ein Schnittstellenelement zur Ausbildung einer Wirkverbindung zwischen dem Motor-Getriebe-Modul 3 und dem Schließer-Modul 11 auf.

Dabei dient der Hebel 9 zur Ausbildung einer Verbindung der Antriebseinrichtung 1 mit dem Flügel, also mit dem beispielhaften Türflügel oder Fensterflügel oder mit einer Zarge, wobei die Antriebseinrichtung 1 wahlweise an der Zarge oder an dem Flügel montierbar ist. Von dem Begriff Zarge wird im Sinne der Erfindung auch ein Türrahmen oder Fensterrahmen umfasst. Insbesondere kann der Hebel 9 derart ausgebildet sein, dass eine Spannungsversorgung der elektrischen Maschine 6 und/oder zumindest ein Steuerungssignal für die elektrische Maschine 6 über den Hebel 9 an das Motor-Getriebe-Modul 3, insbesondere an die elektrische Maschine 6 und/oder an ein Steuerungsmodul 26, übertragbar sind. Der Hebel 9 ist in einer Laufschiene 2 geführt, welche in dem dargestellten Ausführungsbeispiel an einer nicht dargestellten Zarge montiert wäre.

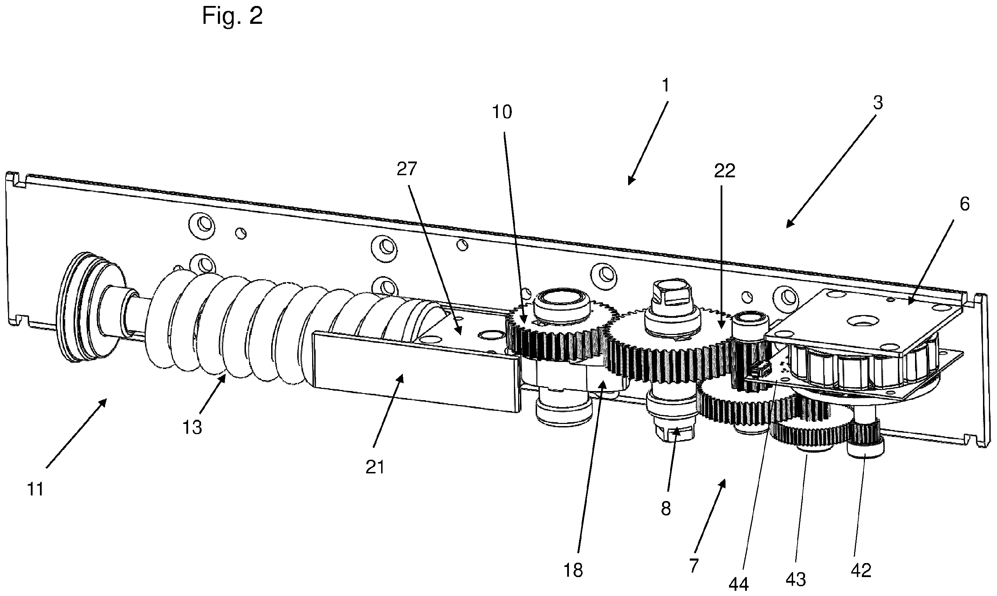

Wie in den Figur 1 und 2 deutlich zu erkennen ist, ist die Abtriebswelle 8 in einem Bauraum zwischen der Maschinenachse X1 der elektrischen Maschine 6 und dem Energiespeicher 13 angeordnet.

Das Motor-Getriebe-Gehäuse 4 weist eine erste Öffnung 16 auf, wobei das Schließer-Gehäuse 12 eine zweite Öffnung 17 aufweist. Wie in Figur 1 erkennbar ist, sind das Motor-Getriebe-Gehäuse 4 und das Schließer-Gehäuse 12 derart zueinander angeordnet, dass durch die erste Öffnung 16 und die zweite Öffnung 17 das Schließer-Modul 11, insbesondere der Energiespeicher 13, und das Getriebe 7, insbesondere die Abtriebswelle 8, mittels des Schnittstellenelements miteinander in Wirkverbindung stehen.

Das Motor-Getriebe-Modul 3 und/oder das Schließer-Modul 11 ist jeweils zumindest teilweise, insbesondere vollständig, innerhalb eines übergeordneten Gehäuses 5 angeordnet. Das Motor-Getriebe-Gehäuse 4 ist mit dem übergeordneten Gehäuse 5 und/oder mit dem Schließer-Gehäuse 12 kraftschlüssig und/oder formschlüssig und/oder stoffschlüssig verbunden. Das Schließer-Gehäuse 12 ist mit dem übergeordneten Gehäuse 5 kraftschlüssig und/oder formschlüssig und/oder stoffschlüssig verbunden. Eine oder mehrere derartige Verbindungen sind beispielhaft in Form zumindest einer Verschraubung ausgeführt.

In den Figuren 1 und 2 ist erkennbar, dass die Abtriesachse X2 parallel zu der Maschinenachse X1 ist.

Das Schließer-Modul 11 weist ein Übersetzungselement 18 zur Übersetzung einer linearen Bewegung des Energiespeichers 13 in eine Drehbewegung des Übersetzungselements 18 um eine Drehachse X3 des Übersetzungselements 18 auf. Wie in Figur 1 erkennbar sind die Abtriebsachse X2 und die Drehachse X3 des Übersetzungselements 18 beabstandet voneinander und verlaufen parallel zueinander. Das Übersetzungselement 18 ist als Kurvenscheibe und zwar als herzförmige Hubkurvenscheibe ausgebildet und drehfest mit einem Schließer-Rad 10 drehbar gelagert.

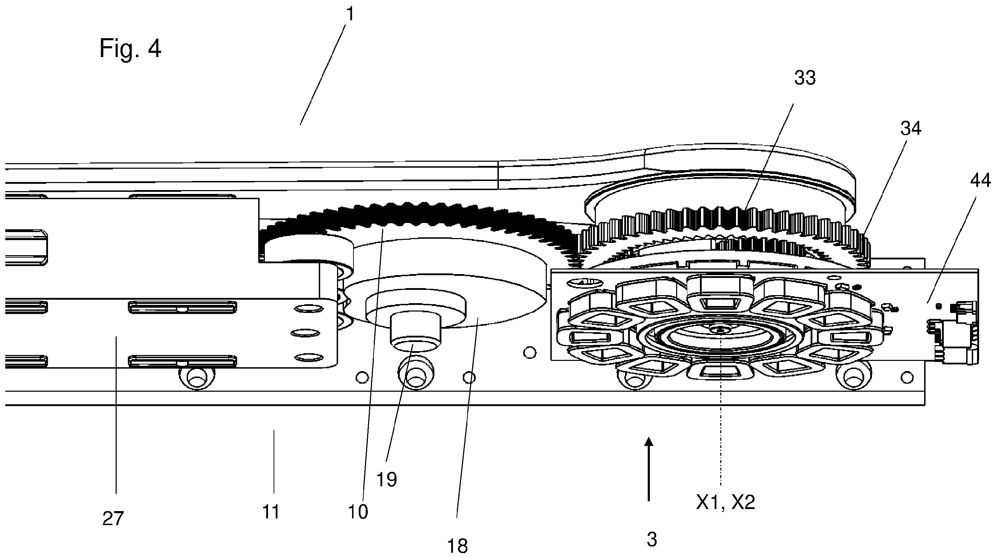

Beispielhaft ist der mechanische Energiespeicher 13 als Druckfeder ausgeführt. Die Druckfeder ist über einen Laschenwagen 27 mit dem Übersetzungselement 18 zur Übersetzung der linearen Bewegung des mechanischen Energiespeichers 13 in eine Drehbewegung des Übersetzungselements 18 verbunden. Der Laschenwagen 27 weist Gleitelemente 21 auf, die in Figur 2 erkennbar sind. Der Laschenwagen 27 ist in Figur 4 erkennbar. Das Schließer-Rad 10 ist koaxial und drehfest zu dem Übersetzungselement 18 zur Übersetzung der linearen Bewegung des Energiespeichers 13 in eine Drehbewegung des Übersetzungselements 18 angeordnet.

Das Getriebe 7 weist ein mit der Abtriebswelle 8 koaxiales und drehfestes Abtriebsrad 22, nämlich Abtriebszahnrad auf, wobei das Abtriebsrad 22 in Eingriff mit dem Schließer-Rad 10 steht.

Das Schnittstellenelement ist in dem Ausführungsbeispiel zu den Figuren 1 und 2 von dem Abtriebsrad 22 gebildet.

Beispielhaft weist das Motor-Getriebe-Gehäuse 4 eine erste Wand 23 mit einer Abtriebsöffnung 24 zur insbesondere drehfesten Verbindung der Abtriebswelle 8 mit dem Hebel 9, eine zweite an die erste Wand 23 angrenzende Wand und eine dritte der zweiten Wand gegenüberliegende Wand auf, wobei die Antriebseinrichtung 1 derart ausgebildet ist, sowohl mit der zweiten Wand als auch mit der dritten Wand zugewandt zu dem Flügel, also zu dem beispielhaften Türflügel befestigt zu werden. Gleiches kann für das Schließer-Gehäuse 12 gelten. Das Motor-Getriebe-Gehäuse 4 aber auch das Schließer-Gehäuse 12 können jeweils quaderförmig ausgebildet sein, um die beidseitige Montierbarkeit zu ermöglichen.

In Figur 1 ist noch das Steuerungsmodul 26 erkennbar, das eine Steuerungseinrichtung aufweist. Das Steuerungsmodul 26 ist vollständig, innerhalb des übergeordneten Gehäuses 5 der Antriebseinrichtung 1 angeordnet ist.

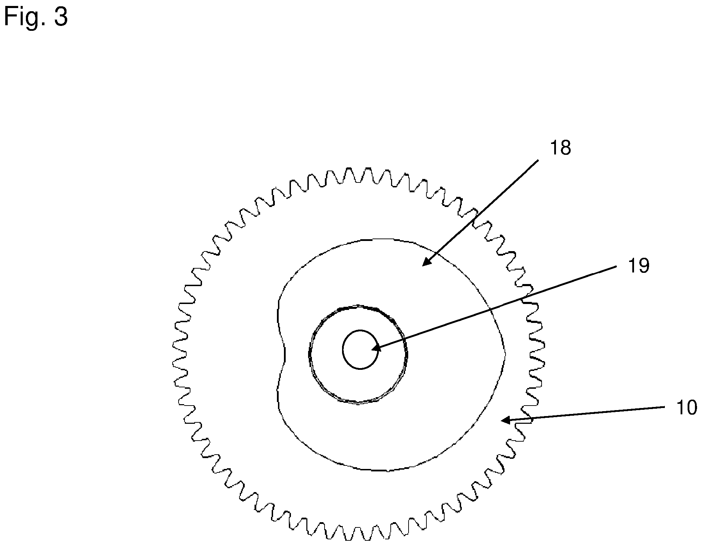

Figur 3 zeigt eine besondere Ausführungsform, wobei das Übersetzungselement 18 als Kurvenscheibe, und zwar als herzförmige Hubkurvenscheibe ausgebildet ist. Wie in Figur 3 ferner erkennbar ist, ist ein fixierter Achskörper 19 angeordnet, wobei das Übersetzungselement 18 und das Schließer-Rad 10 an dem Achskörper 19 drehbar gelagert sind.

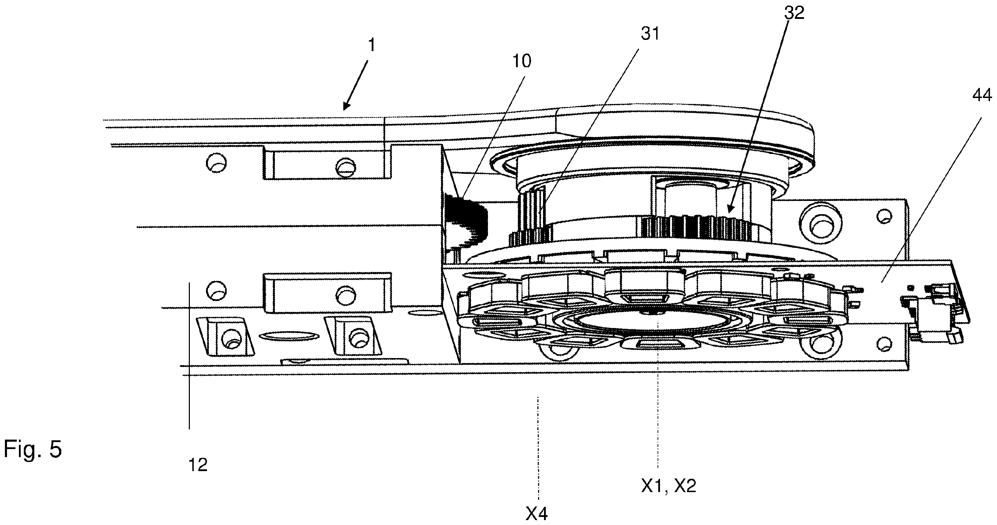

In den Figuren 4 und 5 ist die Antriebseinrichtung 1 in einer weiteren Ausgestaltung dargestellt, wobei das Getriebe 7 im Unterschied zu dem Ausführungsbeispiel zu den Figuren 1 und 2 als Planetengetriebe ausgeführt ist. Die Begriffe Planet und Planetenrad werden synonym verwendet.

Als Planetengetriebe weist das Getriebe 7 zumindest eine Wolfromstufe auf. Eine derartige Wolfromstufe weist eine erste Getriebestufe und eine zweite Getriebestufe auf. Die erste Getriebestufe umfasst ein Sonnenrad, mehrere erste an einem Planetenträger befestigte, von dem Sonnenrad angetriebenen Planeten 31 und ein erstes, feststehendes Hohlrad. Das Sonnenrad und das erste feststehende Hohlrad sind in den Figuren 4 und 5 aufgrund des gewählten Schnittes nicht erkennbar. Die zweite Getriebestufe umfasst ein zweites drehbares Hohlrad 33, zweite mit den ersten Planeten 31 drehfeste, insbesondere einstückige Planeten 32. Die zweiten Planeten 32 treiben das zweite Hohlrad 33 an. Das zweite Hohlrad 33 bildet dabei den Leistungsausgang des Planetengetriebes. In Figur 5 ist das zweite Hohlrad entfernt.

Das Getriebe 7 gemäß dem Ausführungsbeispiel zu den Figuren 4 und 5 ist als eine Kombination aus Planetengetriebe und Stirnradgetriebe ausgebildet. Dabei weist das zweite Hohlrad 33 des Planetengetriebes eine Außenverzahnung 34 auf und agiert als Stirnrad. Das zweite Hohlrad 33 steht in Eingriff mit dem Schließer-Rad 10 des Schließer-Moduls 11. Das Schließer-Rad 10 bildet in dem Ausführungsbeispiel zu den Figuren 4 und 5 das Schnittstellenelement.

Bei dem Ausführungsbeispiel zu den Figuren 4 und 5 ist die Abtriebsachse X2 koaxial zur Maschinenachse X1.

Bei den beschriebenen Ausführungsbeispielen ist die elektrische Maschine 6 jeweils als Axialflussmaschine ausgeführt.

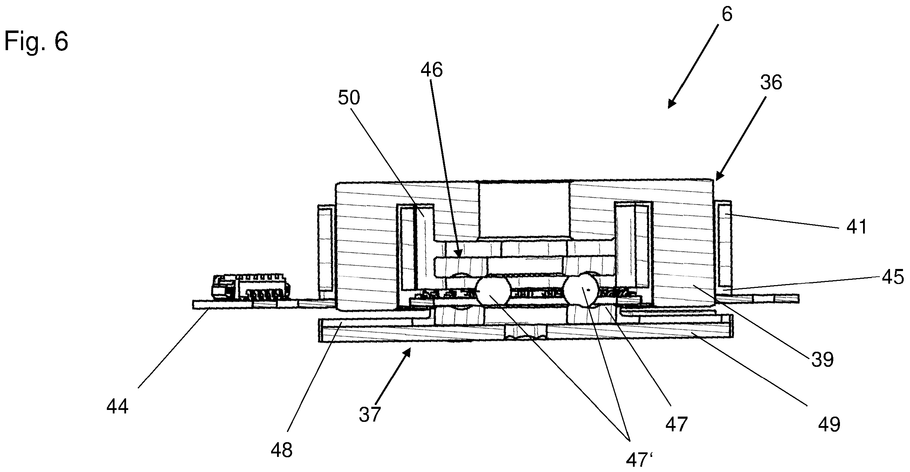

Die elektrische Maschine 6 ist als Einzelheit in Figur 6 prinzipiell dargestellt. Die elektrische Maschine 6 weist einen Stator 36 und einen Rotor 37 auf. Der Stator 36 weist einen plattenförmigen Statorsockel 38 und mehrere von dem Statorsockel 38 in axialer Richtung der elektrischen Maschine 6 abstehende Statorzähne 39 auf. Dabei ist um jeden der Statorzähne 39 jeweils eine Spule 41 angeordnet. Jeder Statorzahn 39 weist einen elektrisch isolierenden Zahnmantel 45 auf, wobei der Stator 36 mehrere Spulen 41 aufweist und jede der Spulen 41 um den Zahnmantel 45 und daher mittelbar über den Zahnmantel 45 um den Statorzahn 39 gewickelt ist. Die Statorzähne 39 durchgreifen dabei eine Platine 44, an welcher die Spulen 41 kontaktiert sind.

In Figur 6 ist erkennbar, dass der Stator 36 ferner einen feststehenden Bolzen 50 umfasst, wobei der Bolzen 50 eine Lageraufnahme 46 zur Aufnahme eines Wälzlagers 47 aufweist. Beispielhaft ist in Figur 6 ein Wälzlager 47 mit Kugeln 47' dargestellt. Die Antriebseinrichtung 1 umfasst das Wälzlager 47, zur drehbaren Lagerung des Rotors 37 gegenüber dem Stator 36, wobei das Wälzlager 47 an der Lageraufnahme 46 des Bolzens 50 aufgenommen ist. Der Rotor 37 ist mittels des Wälzlagers 47 an dem Stator 36 drehbar gelagert. In einer nicht dargestellten Ausführungsform kann eine Lageraufahme direkt am Statorsockel vorgesehen sein, an welcher ein Wälzlager aufgenommen sein kann. Der Rotor 37 umfasst mehrere Permanentmagnete 48. Jeder Permanentmagnet 48 ist plattenförmig ausgebildet. Der Rotor 37 weist eine Rotorplatte 49 in Form einer Rotorscheibe auf. Ferner steht jeder Permanentmagnet 48 von der Rotorplatte 49 des Rotors 37 in axialer Richtung der elektrischen Maschine, insbesondere in Richtung zu dem Stator 36, ab.

### Bezugszeichenliste:

- 1: Antriebseinrichtung
- 2: Laufschiene
- 3: Motor-Getriebe-Modul
- 4: Motor-Getriebe-Gehäuse
- 5: übergeordnetes Gehäuse
- 6: elektrische Maschine
- 7: Getriebe
- 8: Abtriebswelle
- 9: Hebel
- 10: Schließer-Rad
- 11: Schließer- Modul
- 12: Schließer- Gehäuse
- 13: mechanischer Energiespeicher
- 16: erste Öffnung in 4
- 17: zweite Öffnung in 12
- 18: Übersetzungselement
- 19: Achskörper
- 21: Gleitelemente
- 22: Abtriebsrad von 7
- 23: erste Wand von 4
- 24: Abtriebsöffnung
- 26: Steuerungsmodul
- 27: Laschenwagen
- 31: Planet
- 32: Planet
- 33: Hohlrad
- 34: Außenverzahnung
- 36: Stator
- 37: Rotor
- 38: Statorsockel
- 39: Statorzähne
- 41: Spule
- 42: erstes Getriebeelement
- 43: zweites Getriebeelement
- 44: Platine
- 45: Zahnmantel
- 46: Lageraufnahme
- 47: Wälzlager
- 47': Kugeln des Wälzlagers 47
- 48: Permanentmagnet
- 49: Rotorplatte
- 50: Bolzen

## Patentansprüche

1. Antriebseinrichtung (1) zum Bewegen eines Flügels, insbesondere eines Türflügels oder eines Fensterflügels, mit einem Motor-Getriebe-Modul (3), das ein Motor-Getriebe-Gehäuse (4), eine elektrische Maschine (6) mit einer Maschinenachse (X1), ein Getriebe (7) mit einer um eine Abtriebsachse (X2) drehbar gelagerten Abtriebswelle (8) zur Verbindung mit einem Hebel (9) umfasst, und mit einem Schließer-Modul (11) umfassend ein Schließer-Gehäuse (12) sowie einen mechanischen Energiespeicher (13) und ein Schnittstellenelement zur Ausbildung einer Wirkverbindung zwischen dem Motor-Getriebe-Modul (3) und dem Schließer-Modul (11),
wobei die Abtriebsachse (X2) parallel oder koaxial zu der Maschinenachse (X1) verläuft, und
das Schnittstellenelement zumindest teilweise von einem Schließer-Rad (10), insbesondere Schließer-Zahnrad, gebildet ist oder mit dem Schließer-Rad (10) in Eingriff steht, wobei das Schließer-Rad (10) koaxial, bevorzugt drehfest, zu einem Übersetzungselement (18) zur Übersetzung der linearen Bewegung des mechanischen Energiespeichers (13) in eine Drehbewegung des Übersetzungselements (18) angeordnet ist, wobei
das Getriebe (7) ein mit der Abtriebswelle (8) koaxiales, insbesondere drehfestes, Abtriebsrad (22), insbesondere Abtriebszahnrad aufweist, wobei das Abtriebsrad (22) in Eingriff mit dem Schnittstellenelement steht oder zumindest einen Teil des Schnittstellenelements bildet,
wobei die Abtriebswelle (8) in einem Bauraum zwischen der Maschinenachse (X1) und dem mechanischen Energiespeicher (13) angeordnet ist, wobei das Schließer-Modul (12) das Übersetzungselement (18) zur Übersetzung einer linearen Bewegung des mechanischen Energiespeichers (13) in eine Drehbewegung des Übersetzungselements (13) um eine Drehachse (X3) des Übersetzungselements (18) umfasst, **dadurch gekennzeichnet, dass**
die Abtriebsachse (X2) und die Drehachse (X3) des Übersetzungselements (18) beabstandet voneinander, parallel zueinander verlaufen.

2. Antriebseinrichtung (1) nach Anspruch 1, **dadurch gekennzeichnet, dass** das Motor-Getriebe-Gehäuse (4) eine erste Öffnung (16) umfasst und das Schließer-Gehäuse (12) eine zweite Öffnung (17) umfasst, wobei das Motor-Getriebe-Gehäuse (4) und das Schließer-Gehäuse (12) derart zueinander angeordnet sind, dass durch die erste und die zweite Öffnung (16,17) das Schließer-Modul (11), insbesondere der mechanische Energiespeicher (13), und das Getriebe (7), insbesondere die Abtriebswelle (8), mittels des Schnittstellenelements miteinander in Wirkverbindung stehen.

3. Antriebseinrichtung (1) nach einem der vorhergehenden Ansprüche, **dadurch gekennzeichnet, dass** das Schnittstellenelement in das Motor-Getriebe-Gehäuse (4) und/oder in das Schließer-Gehäuse (12) hineinragt.

4. Antriebseinrichtung (1) nach einem der vorhergehenden Ansprüche, **dadurch gekennzeichnet, dass** das Schnittstellenelement zumindest ein Zahnrad umfasst.

5. Antriebseinrichtung (1) nach einem der vorhergehenden Ansprüche, **dadurch gekennzeichnet, dass** das Motor-Getriebe-Gehäuse (4) mit dem Schließer-Gehäuse (12) kraftschlüssig und/oder formschlüssig und/oder stoffschlüssig verbunden ist.

6. Antriebseinrichtung (1) nach einem der vorhergehenden Ansprüche, **dadurch gekennzeichnet, dass** das Übersetzungselement (18) und das Schließer-Rad (10) formschlüssig und/oder kraftschlüssig und/oder stoffschlüssig verbunden sind, bevorzugt einstückig ausgebildet sind.

7. Antriebseinrichtung (1) nach einem der vorhergehenden Ansprüche, **dadurch gekennzeichnet, dass** ein Übersetzungsverhältnis von dem Übersetzungselement (18) zu der Abtriebswelle (8) im Bereich von 0,6 bis 1,1, bevorzugt im Bereich von 0,65 bis 1,05, besonders bevorzugt im Bereich von 0,7 bis 1,0, insbesondere 0,75 bis 0,9 liegt.

8. Antriebseinrichtung (1) nach einem der vorhergehenden Ansprüche, **dadurch gekennzeichnet, dass** das Motor-Getriebe-Gehäuse (4) oder das Schließer-Gehäuse (12) eine erste Wand (23) mit einer Abtriebsöffnung (24) zur insbesondere drehfesten Verbindung der Abtriebswelle (8) mit dem Hebel (9), eine zweite an die erste Wand (23) angrenzende Wand und eine dritte der zweiten Wand gegenüberliegende Wand umfasst, wobei die Antriebseinrichtung (1) derart ausgebildet ist, sowohl mit der zweiten Wand als auch mit der dritten Wand zugewandt zu dem Flügel oder einer Zarge befestigt zu werden.

9. Antriebseinrichtung (1) nach einem der vorhergehenden Ansprüche, **gekennzeichnet durch** ein Steuerungsmodul (26) mit einer Steuerungseinrichtung, bevorzugt, dass das Steuerungsmodul (26) bevorzugt zumindest teilweise, insbesondere vollständig, innerhalb eines übergeordneten Gehäuses (5) der Antriebseinrichtung (1) angeordnet ist.

10. Antriebseinrichtung (1) nach einem der vorhergehenden Ansprüche, **dadurch gekennzeichnet, dass** die elektrische Maschine (6) als Axialflussmaschine ausgebildet ist.

## Claims

1. A drive device (1) for moving a leaf, in particular a door leaf or a window leaf, with a motor-gearbox module (3) which comprises a motor-gearbox housing (4), an electric machine (6) with a machine axis (X1), a gearbox (7) with an output shaft (8) mounted rotatably about an output axis (X2) for connection to a lever (9), and with a closer module (11) comprising a closer housing (12) as well as a mechanical energy accumulator (13) and an interface element for forming an operative connection between the motor-gearbox module (3) and the closer module (11),
wherein the output axis (X2) runs parallel or coaxial to the machine axis (X1), and
the interface element is at least partially formed by a closer wheel (10), in particular a closer gear wheel, or is in engagement with the closer wheel (10), wherein the closer wheel (10) is arranged coaxially, preferably non-rotatably, relative to a transmission element (18) for translating the linear movement of the mechanical energy accumulator (13) into a rotary movement of the transmission element (18), wherein
the gearbox (7) has an output wheel (22), in particular an output gear wheel, which is coaxial, in particular non-rotatable, with the output shaft (8) wherein the output wheel (22) is in engagement with the interface element or forms at least a part of the interface element,
wherein the output shaft (8) is arranged in an installation space between the machine axis (X1) and the mechanical energy accumulator (13), wherein the closer module (12) comprises the transmission element (18) for translating a linear movement of the mechanical energy accumulator (13) into a rotary movement of the transmission element (13) about an axis of rotation (X3) of the transmission element (18), **characterised in that** the output axis (X2) and the axis of rotation (X3) of the transmission element (18) run spaced apart from one another and parallel to one another.

2. The drive device (1) according to claim 1, **characterised in that** the motor-gearbox housing (4) comprises a first opening (16) and the closer housing (12) comprises a second opening (17), wherein the motor-gearbox housing (4) and the closer housing (12) are arranged relative to one another in such manner that the closer module (11), in particular the mechanical energy accumulator (13), and the gearbox (7), in particular the output shaft (8), are operatively connected to one another by means of the interface element through the first and second openings (16, 17).

3. The drive device (1) according to one of the preceding claims, **characterised in that** the interface element projects into the motor-gearbox housing (4) and/or into the closer housing (12).

4. The drive device (1) according to one of the preceding claims, **characterised in that** the interface element comprises at least one gear wheel.

5. The drive device (1) according to one of the preceding claims, **characterised in that** the motor-gearbox housing (4) is connected to the closer housing (12) in a force-fitting and/or form-fitting and/or materially-bonded manner.

6. The drive device (1) according to one of the preceding claims, **characterised in that** the transmission element (18) and the closer wheel (10) are connected in a force-fitting and/or form-fitting and/or materially-bonded manner, preferably are in one piece.

7. The drive device (1) according to one of the preceding claims, **characterised in that** a transmission ratio from the transmission element (18) to the output shaft (8) is in the range from 0.6 to 1.1, preferably in the range from 0.65 to 1.05, particularly preferably in the range from 0.7 to 1.0, in particular 0.75 to 0.9.

8. The drive device (1) according to one of the preceding claims, **characterised in that** the motor-gearbox housing (4) or the closer housing (12) comprises a first wall (23) with an output opening (24) for connecting the output shaft (8) to the lever (9), in particular in a non-rotatable manner, a second wall adjoining the first wall (23) and a third wall opposite the second wall, wherein the drive device (1) is designed in such manner to be fastened both to the second wall and to the third wall facing the leaf or a frame.

9. The drive device (1) according to one of the preceding claims, **characterised by** a control module (26) with a control device, preferably in that the control module (26) is arranged preferably at least partially, in particular completely, within a higher-level housing (5) of the drive device (1).

10. The drive device (1) according to one of the preceding claims, **characterised in that** the electric machine (6) is in the form of an axial flux machine.

## Revendications

1. Dispositif d'entraînement (1) pour le déplacement un battant, en particulier d'un battant de porte ou un battant de fenêtre, comportant un module moteur-transmission (3) qui comprend un carter de moteur-transmission (4), une machine électrique (6) comportant un axe de machine (X1), une transmission (7) comportant un arbre de sortie (8) logé de manière rotative autour d'un axe de sortie (X2) pour la liaison avec un levier (9), et comportant un module de contact à fermeture (11) comprenant un carter de contact à fermeture (12) ainsi qu'un accumulateur d'énergie mécanique (13) et un élément d'interface pour former une liaison active entre le module moteur-transmission (3) et le module de contact à fermeture (11),
dans lequel l'axe de sortie (X2) s'étend parallèle ou coaxial à l'axe de machine (X1), et
l'élément d'interface est formé au moins partiellement par une roue de contact à fermeture (10), en particulier une roue dentée de contact à fermeture, ou est en prise avec la roue de contact à fermeture (10), dans lequel la roue de contact à fermeture (10) est agencée de manière coaxiale, de préférence de manière solidaire en rotation, par rapport à un élément de traduction (18) pour la traduction du mouvement linéaire de l'accumulateur d'énergie mécanique (13) en un mouvement de rotation de l'élément de traduction (18), dans lequel
la transmission (7) présente une roue de sortie (22), en particulier une roue dentée de sortie, coaxiale à l'arbre de sortie (8), en particulier de manière solidaire en rotation, dans lequel la roue de sortie (22) est en prise avec l'élément d'interface ou forme au moins une partie de l'élément d'interface,
dans lequel l'arbre de sortie (8) est agencé dans un espace de construction entre l'axe de machine (X1) et l'accumulateur d'énergie mécanique (13), dans lequel le module de contact à fermeture (12) comprend l'élément de traduction (18) pour la traduction d'un mouvement linéaire de l'accumulateur d'énergie mécanique (13) en un mouvement de rotation de l'élément de traduction (13) autour d'un axe de rotation (X3) de l'élément de traduction (18), **caractérisé en ce que** l'axe de sortie (X2) et l'axe de rotation (X3) de l'élément de traduction (18) sont espacés l'un de l'autre et s'étendent parallèlement l'un à l'autre.

2. Dispositif d'entraînement (1) selon la revendication 1, **caractérisé en ce que** le carter de moteur-transmission (4) comprend une première ouverture (16) et le carter de contact à fermeture (12) comprend une seconde ouverture (17), dans lequel le carter de moteur-transmission (4) et le carter de contact à fermeture (12) sont agencés l'un par rapport à l'autre de telle sorte, que le module de contact à fermeture (11), en particulier l'accumulateur d'énergie mécanique (13), et la transmission (7), en particulier l'arbre de sortie (8), sont en liaison active l'un avec l'autre par la première et la seconde ouverture (16, 17) par le biais de l'élément d'interface.

3. Dispositif d'entraînement (1) selon l'une des revendications précédentes, **caractérisé en ce que** l'élément d'interface pénètre dans le carter de moteur-réducteur (4) et/ou dans le carter de contact à fermeture (12).

4. Dispositif d'entraînement (1) selon l'une des revendications précédentes, **caractérisé en ce que** l'élément d'interface comprend au moins une roue dentée.

5. Dispositif d'entraînement (1) selon l'une des revendications précédentes, **caractérisé en ce que** le carter de moteur-transmission(4) est relié au carter de contact à fermeture (12) par complémentarité de force et/ou par complémentarité de forme et/ou par complémentarité de matière.

6. Dispositif d'entraînement (1) selon l'une des revendications précédentes, **caractérisé en ce que** l'élément de traduction(18) et la roue de contact à fermeture (10) sont reliés par complémentarité de forme et/ou par complémentarité de force et/ou par complémentarité de matière, de préférence sont réalisés d'un seul tenant.

7. Dispositif d'entraînement (1) selon l'une des revendications précédentes, **caractérisé en ce qu'**un rapport de traduction de l'élément de traduction(18) à l'arbre de sortie (8) se situe dans la plage de 0,6 à 1,1, de préférence dans la plage de 0,65 à 1,05, de manière particulièrement préférée dans la plage de 0,7 à 1,0, en particulier de 0,75 à 0,9.

8. Dispositif d'entraînement (1) selon l'une des revendications précédentes, **caractérisé en ce que** le carter de moteur-transmission(4) ou le carter de contact à fermeture(12) comprend une première paroi (23) avec une ouverture de sortie (24) pour la liaison en particulier de manière solidaire en rotation de l'arbre de sortie (8) au levier (9), une deuxième paroi adjacente à la première paroi (23) et une troisième paroi opposée à la deuxième paroi, dans lequel le dispositif d'entraînement (1) est réalisé de sorte à être fixé à la fois par la deuxième paroi et également par la troisième paroi en regard du battant ou d'un dormant.

9. Dispositif d'entraînement (1) selon l'une des revendications précédentes, **caractérisé par** un module de commande (26) comportant un dispositif de commande, de préférence en ce que le module de commande (26) est agencé de préférence au moins partiellement, en particulier entièrement, à l'intérieur d'un carter (5) à agencement supérieur du dispositif d'entraînement (1).

10. Dispositif d'entraînement (1) selon l'une des revendications précédentes, **caractérisé en ce que** la machine électrique (6) est réalisée comme une machine à flux axial.
